# EUROPÄISCHE PATENTSCHRIFT

(11) **EP 0 357 143 B1**
(45) Veröffentlichungstag und Bekanntmachung des Hinweises auf die Patenterteilung: **17.02.1993**
(21) Anmeldenummer: 89202183.3
(22) Anmeldetag: 29.08.1989
(51) Int. Cl.: C25C 7/02, C25B 11/03

(54) **Gasdiffusionselektrode**
Gas diffusion electrode
Electrode à diffusion gazeuse

(30) Priorität: 02.09.1988 DE 3829879
(43) Veröffentlichungstag der Anmeldung: 07.03.1990
(73) Patentinhaber: METALLGESELLSCHAFT AG, 60015 Frankfurt (DE)
(72) Erfinder: Drefahl, Klaus, D-6450 Hanau am Main 9 (DE)

(56) Entgegenhaltungen:
- EP-A- 0 082 643
- US-A- 3 215 562

## Beschreibung

Die Erfindung betrifft eine Gasdiffusionselektrode, bestehend aus einer elektrisch leitenden Platte, auf der Platte befestigtem, elektrisch leitendem Kohlefasertuch und Zu- und Ableitungen für das Gas zu dem Kohlefasertuch.

Der Einsatz von Gasdiffusionselektroden als Anode bei der elektrolytischen Gewinnung von Metallen, wie Zink und Kupfer, aus sauren Lösungen ergibt eine beträchtliche Senkung des elektrischen Energieverbrauches. So kann z.B. bei Verwendung einer Wasserstoffdiffusionsanode bei der elektrolytischen Zinkgewinnung aus schwefelsaurer Lösung durch Erniedrigung der Zellenspannung der Energieverbrauch etwa halbiert werden. Solche Gasdiffusionselektroden sind z.B. beschrieben in der US-PS 4 248 682 und der US-PS 4 412 894.

Das elektrisch leitende Kohlefasertuch wird elektrisch leitend mit der elektrisch leitenden Platte verbunden. Das Kohlefasertuch soll eine möglichst große freie Oberfläche haben, die mit dem Gas in Verbindung steht. Bei der normalen elektrolytischen Zinkgewinnung werden unlösliche Anoden aus Bleilegierungen verwendet, die eine fläche von über 1 m² haben. Wenn diese Bleianoden mit fensterartigen Öffnungen ausgebildet werden, über die Öffnungen Kohlefasertücher gelegt, an den Rändern mit den Anoden verbunden werden und in die Fenster Wasserstoff geblasen wird, tritt an den Verbindungsstellen eine starke Belastung auf, die nach einiger Zeit zur Zerstörung der Verbindung führen kann. Außerdem beult sich das Kohlefasertuch unter dem Gasdruck in den Elektrolyten hinein aus, so daß die Anode keine gerade Oberfläche aufweist. Diese Schwierigkeiten nehmen mit steigender Größe der Anoden zu.

Der Erfindung liegt die Aufgabe zugrunde, diese Nachteile zu Vermeiden und eine Gasdiffusionselektrode zu schaffen, bei der die Belastung der Verbindungen minimal gehalten wird, und die eine möglichst gerade Oberfläche unter Gasdruck hat.

Diese Aufgabe wird erfindungsgemäß gelöst, indem die Gasdiffusionselektrode der eingangs genannten Art derart ausgestaltet wird, daß zwei Kohlefasertücher mit Abstand zueinander angeordnet sind und durch Anker miteinander verbunden sind.

Die elektrisch leitende Platte kann aus einem Metall oder einer Legierung oder einem elektrisch leitenden Kunststoff bestehen. Das Material muß im Elektrolyten unlöslich sein, eine gute Steifheit aufweisen und so schwer sein, daß kein Auftrieb im Elektrolyten erfolgt. Die Platte kann massiv sein, sie kann aber auch Aussparungen zur Reduzierung des Gewichtes und Leitungen für die Gaszufuhr enhalten. Als Anode für eine Zinkelektrolyse wird als Plattenmaterial eine Bleilegierung verwendet. Die Kohlefasertücher werden aus Geweben oder Gewirken aus Kunststoff hergestellt, die anschließend bei entsprechenden Temperaturen graphitiert werden. Die elektrisch leitende Verbindung der Kohlefasertücher mit der Platte erfolgt vorzugsweise durch Verkleben mit einem elektrisch leitenden Kleber. Die Verbindung kann aber auch auf andere Weise erfolgen, wie z.B. Klemmen, Verzahnen oder Löten. Die Anker können aus Kunststoff oder Metall bestehen.

Eine Ausgestaltung besteht darin, daß die elektrisch leitende Platte teilweise hohl ausgebildet ist, fensterartige Öffnungen auf beiden Seiten hat, vor den fensterartigen Öffnungen auf jeder Seite ein Kohlefasertuch befestigt ist, als Anker fäden durch die Kohlefasertücher und die fensterartigen Öffnungen angeordnet sind und die Zu- und Ableitungen für das Gas in den Hohlraum der Platte angeordnet sind. Je nach Größe der Platte sind ein oder mehrere Fenster in der Platte angeordnet. Jedes Fenster wird durch eine quer durch die Platte gehende Aussparung gebildet. In die Fenster münden jeweils Zu- und Ableitungen für das Gas. Auf jeder Seite des Fensters wird die fensterartige Öffnung durch ein Kohlefasertuch geschlossen, das mit seinen Rändern auf der Platte befestigt ist, wobei die Befestigung vorzugsweise durch Aufkleben der Ränder auf die Platte erfolgt. Die als Anker dienenden fäden können aus Kunststoff oder Metall bestehen. Sie müssen im Elektrolyten unlöslich sein. Diese Ausgestaltung hat den Vorteil, daß bei erheblich reduzierten mechanischen Spannungen in den Kohlefasertüchern auch das Gewicht der Platte reduziert wird. Jedoch kann die Platte durch die Aussparungen statisch beeinträchtigt werden.

Eine Ausgestaltung besteht darin, daß um die Platte herum über den Kohlefasertüchern ein Netz angeordnet ist und die Anker von Knotenpunkten des Netztes ausgehen. Das Netz kann wie die Anker aus Kunststoff oder Metall bestehen. Das Netz verringert die mechanischen Spannungen in den Kohlefasertüchern nochmals.

Eine vorzugsweise Ausgestaltung besteht darin, daß die elektrisch leitende Platte massiv ausgebildet ist, auf jeder Seite der Platte zwei mit Abstand zueinander angeordnete und zwischen sich einen geschlossenen Gasraum bildende Kohlefasertücher angeordnet sind, wobei das an der Platte liegende Kohlefasertuch auf der Platte aufgeklebt ist, die zwei Kohlefasertücher durch Anker miteinander verbunden sind und in der Platte Zu- und Ableitungen für das Gas zu den Gasräumen zwischen den Kohlefasertüchern angeordnet sind. Die Anker können aus fäden, inselförmigen Stegen oder durchgehenden Stegen bestehen. Die Anker dienen gleichzeitig als Distanzhalter für die beiden Kohlefasertücher. Die Anker können aus Kunststoff oder Metall wie z.B. Titan bestehen. Das an der Platte liegende Kohlefasertuch wird auf seiner ganzen Fläche mit elektrisch leitendem Kleber auf die Platte aufgeklebt. Bei dieser Ausgestaltung tritt keinerlei mechanische Belastung der Klebeverbindung auf und es besteht eine sehr gute elektrisch leitende Verbindung zwischen Platte und Kohlefasertuch.

Eine weitere vorzugsweise Ausgestaltung besteht darin, daß die zwei mit Abstand zueinander angeordneten und zwischen sich einen geschlossenen Gasraum bildenden Kohlefasertücher und ihre Verbindung durch Anker aus Kunststofftüchern mit eingewirkten Stegen oder fäden aus Kunststoff, z.B. Polfäden oder Bündeln von Polfäden, bestehen, die graphitiert sind. Dadurch wird eine gute und stabile Einheit aus Kohlefasertüchern und Ankern gebildet.

Die Erfindung wird anhand einer Bleianode für die Zinkgewinnung näher und beispielsweise erläutert.

Figur 1 ist eine Vorderansicht einer Anode mit drei durchgehenden Fenstern.

Figur 2 ist ein Schnitt gemäß I-I in Figur 1 in vergrößerter Ausführung.

Figur 3 ist eine Vorderansicht einer massiv ausgebildeten Anode, auf die zwei mit Abstand zueinander angeordnete und zwischen sich einen geschlossenen Gasraum bildende Kohlefasertücher aufgeklebt sind, die durch Anker miteinander verbunden sind. Es sind drei verschiedene Ausbildungen der Anker dargestellt. In Wirklichkeit werden die drei Kohlefasertücher durch ein durchgehendes Kohlefasertuch mit einheitlicher Ausbildung der Anker ersetzt.

Figur 4 ist ein Schnitt gemäß II-II bzw. III-III in Figur 3 in vergrößerter Ausführung.

Figur 5 ist ein Schnitt gemäß IV-IV in Figur 3 in vergrößerter Ausführung.

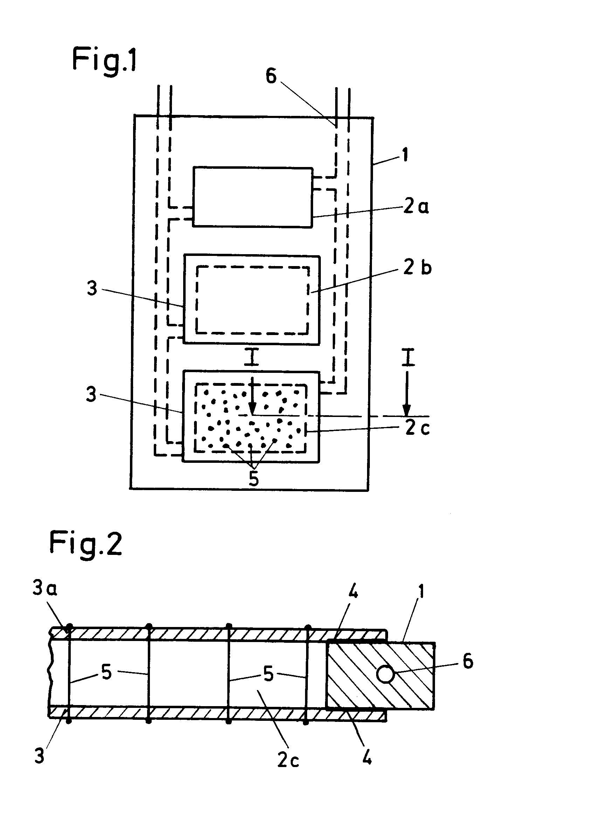

In Figur 1 sind in der Anode (1) drei durchgehende Fenster (2a, 2b, 2c) angeordnet. Das Fenster 2a ist ohne Kohlefasertuchabdeckung, das Fenster 2b mit Kohlefaserabdeckung, jedoch ohne Verbindung der beiden Kohlefasertücher durch Anker dargestellt, und das Fenster 2c ist in der erfindungsgemäßen Weise mit Abdeckung durch Kohlefasertücher und Verbindung durch Anker dargestellt. Wie aus der Figur 2 ersichtlich, ist auf jeder Seite des Fensters 2c ein Kohlefasertuch (3, 3a) über die fensterartigen Öffnungen gelegt und mit einem elektrisch leitenden Kleber (4) auf der Anode (1) aufgeklebt. Die beiden gegenüberliegenden Kohlefasertücher 3, 3a sind durch Fäden (5) als Anker miteinander verbunden. In der Anode (1) sind Bohrungen (6) als Zu- und Ableitungen für den Wasserstoff in die einzelnen Fenster (2a, 2b, 2c) angeordnet.

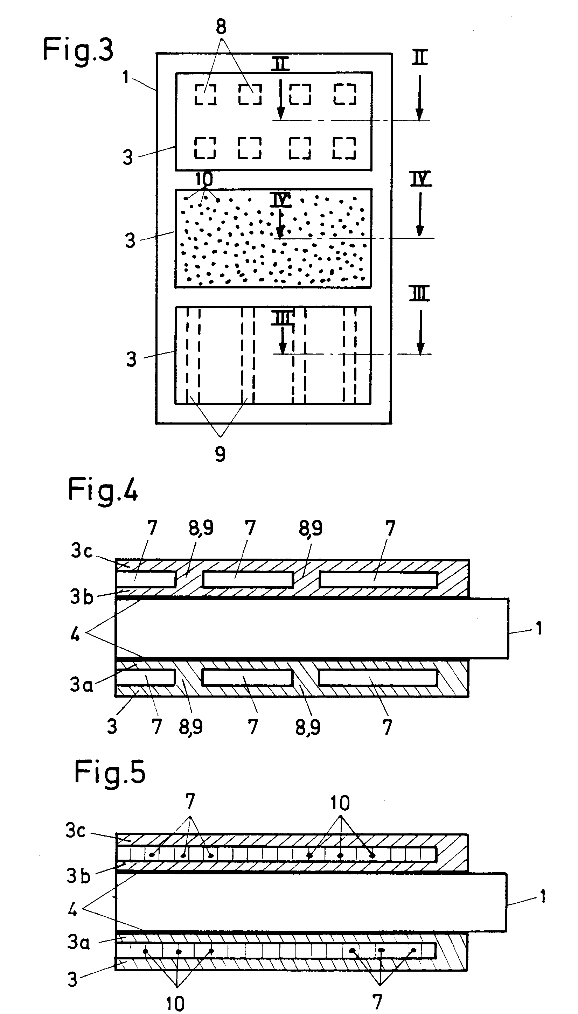

Wie aus den Figuren 4 und 5 ersichtlich, sind in der Figur 1 auf jeder Seite der Anode (1) jeweils zwei Kohlefasertücher (3, 3a und 3b, 3c) mit Abstand zueinander angeordnet und bilden zwischen sich einen geschlossenen Gasraum (7). In der oberen Darstellung der Figur 3 sind die Kohlefasertücher 3, 3a und 3, 3c durch inselartige Stege als Anker miteinander verbunden. In der unteren Darstellung der Figur 3 sind die Kohlefasertücher 3, 3a und 3b, 3c durch durchgehende Stege (9) miteinander verbunden. In der mittleren Darstellung in Figur 3 sind die Kohlefasertücher 3, 3a und 3b, 3c durch fäden (10) miteinander verbunden. Die Kohlefasertücher 3a und 3b sind auf jeder Seite der Anode (1) mit einem elektrisch leitenden Kleber (4) aufgeklebt.

Die Vorteile der Erfindung bestehen darin, daß ein Ausbeuten der Kohlefasertücher verhindert 'wird und damit eine gerade Oberfläche der Kohlefasertücher unter Gasdruck gewährleistet wird, und daß die mechanische Belastung der Verbindungen der Kohlefasertücher mit der Platte unter Gasdruck gering gehalten wird, wodurch insbesondere die Haltbarkeit von Klebeverbindungen wesentlich verbessert wird.

## Patentansprüche

1. Gasdiffusionselektrode bestehend aus einer elektrisch leitenden Platte, auf der Platte befestigtem, elektrisch leitendem Kohlefasertuch und Zu- und Ableitungen für das Gas zu dem Kohlefasertuch, dadurch gekennzeichnet, daß zwei Kohlefasertücher mit Abstand zueinander angeordnet sind und durch Anker miteinander verbunden sind.

2. Gasdiffusionselektrode nach Anspruch 1, dadurch gekennzeichnet, daß die elektrisch leitende Platte teilweise hohl ausgebildet ist, fensterartige Öffnungen auf beiden Seiten hat, vor den fensterartigen Öffnungen auf jeder Seite ein Kohlefasertuch befestigt ist, als Anker Fäden durch die Kohlefasertücher und die fensterartigen Öffnungen angeordnet sind und die Zu- und Ableitungen für das Gas in den Hohlraum der Platte angeordnet sind.

3. Gasdiffusionselektrode nach Anspruch 2, dadurch gekennzeichnet, daß um die Platte herum über den Kohlefasertüchern ein Netz angeordnet ist und die Anker von Knotenpunkten des Netztes ausgehen.

4. Gasdiffusionselektrode nach Anspruch 1, dadurch gekennzeichnet, daß die elektrisch leitende Platte massiv ausgebildet ist, auf jeder Seite der Platte zwei mit Abstand zueinander angeordnete und zwischen sich einen geschlossenen Gasraum bildende Kohlefasertücher angeordnet sind, wobei das an der Platte liegende Kohlefasertuch auf der Platte aufgeklebt ist, die zwei Kohlefasertücher durch Anker miteinander verbunden sind und in der Platte Zu- und Ableitungen für das Gas zu den Gasräumen zwischen den Kohlefasertüchern angeordnet sind.

5. Gasdiffusionsleketrode nach Anspruch 4, dadurch gekennzeichnet, daß die zwei mit Abstand zueinander angeordneten und zwischen sich einen geschlossenen Gasraum bildenden Kohlefasertücher und ihre Verbindung durch Anker aus Kunststofftüchern mit eingewirkten Stegen oder Fäden aus Kunststoff bestehen, die graphitiert sind.

## Claims

1. A gas diffusion electrode consisting of an electrically conductive plate, an electrically conductive carbon fibre cloth attached to the plate, and lines for feeding the gas to and removing it from the carbon fibre cloth, characterised in that two carbon fibre cloths are arranged spaced apart and are connected together by anchoring means.

2. A gas diffusion electrode according to Claim 1, characterised in that the electrically conductive plate is made partially hollow, has window-like openings on both sides, a carbon fibre cloth is attached in front of the window-like openings on either side, threads are arranged through the carbon fibre cloths and the window-like openings as anchoring means, and the lines for feeding and removing the gas are located in the cavity of the plate.

3. A gas diffusion electrode according to Claim 2, characterised in that a net is arranged around the plate and over the carbon fibre cloths and the anchoring means start from nodes of the net.

4. A gas diffusion electrode according to Claim 1, characterised in that the electrically conductive plate is solid, two spaced-apart carbon fibre cloths which form a closed gas space between them are located on either side of the plate, the carbon fibre cloth lying on the plate being glued to the plate, the two carbon fibre cloths being connected together by anchoring means, and lines for feeding the gas to and removing the gas from the gas spaces are arranged in the plate between the carbon fibre cloths.

5. A gas diffusion electrode according to Claim 4, characterised in that the two spaced-apart carbon fibre cloths which form a closed gas space between them and their connection by anchoring means consist of plastic cloths with worked-in crosspieces or threads of plastic, which are graphitised.

## Revendications

1. Electrode à diffusion gazeuse, constituée d'une plaque conductrice de l'électricité, d'une nappe de fibres de carbone conductrice de l'électricité fixée à la plaque et de conduits d'amenée du gaz à la nappe de fibres de carbone et d'évacuation du gaz, caractérisée en ce qu'il est prévu deux nappes de fibres de carbone à distance l'une de l'autre et reliées entre elles par des tirants.

2. Electrode à diffusion gazeuse suivant la revendication 1, caractérisée en ce que la plaque conductrice de l'électricité est partiellement creuse, a des ouvertures en forme de fenêtre sur les deux faces, une nappe en fibres de carbone étant fixée de chaque côté devant les ouvertures en forme de fenêtre, des fils servant de tirants traversant les nappes de fibres de carbone et passant dans les ouvertures en forme de fenêtre et les conduits d'amenée et d'évacuation du gaz étant disposés dans la cavité de la plaque.

3. Electrode à diffusion gazeuse suivant la revendication 2, caractérisée en ce que tout autour de la plaque est disposé, au-dessus des nappes de fibres de carbone, un filet et les tirants partent des noeuds du filet.

4. Electrode à diffusion gazeuse suivant la revendication 1, caractérisée en ce que la plaque conductrice de l'électricité est pleine, de chaque côté de la plaque sont prévues deux nappes en fibres de carbone disposées à distance l'une de l'autre et formant entre elles un espace fermé réservé au gaz, la nappe de fibres de carbone se trouvant sur la plaque étant collée à la plaque, les deux nappes de fibres de carbone étant reliées antre elles par des tirants et, dans la plaque, sont prévus des conduits d'amenée du gaz aux espaces réservés au gaz compris entre les nappes en fibres de carbone et d'évacuation du gaz de ces espaces.

5. Electrode à diffusion gazeuse suivant la revendication 4, caractérisée en ce que les deux nappes de fibres de carbone disposées à distance l'une de l'autre et formant entre elles une chambre fermée réservée au gaz et leurs liaisons par des tirants sont constituées de nappes en matière plastique dans lesquelles sont incorporés des barrettes ou des fils en matière plastique, qui sont graphités.
